# FASCICULE DE BREVET EUROPEEN

(11) **EP 1 800 581 B1**
(45) Date de publication et mention de la délivrance du brevet: **18.02.2009**
(21) Numéro de dépôt: 06356150.0
(22) Date de dépôt: 21.12.2006
(51) Int. Cl.: A47J 45/06

(54) **Recipient de cuisine avec au moins un moyen de prehension pivotant**
Kochgefäss mit zumindest einem schwenkbaren Greifmittel
Cooking vessel with at least a pivoting gripping means

(30) Priorité: 23.12.2005 FR 0513409
(43) Date de publication de la demande: 27.06.2007
(73) Titulaire: SEB S.A., 69132 Ecully Cedex (FR)
(72) Inventeur: Chameroy, Eric, 21260 Veronnes (FR); Rhetat, Eric Jacques, 21000 Dijon (FR); Cartigny, Michel Pierre, 21310 Mirebeau (FR)
(74) Mandataire: Martin, Didier Roland Valéry

(56) Documents cités:
- CH-A- 208 509
- DE-C- 835 341
- US-A- 3 683 452
- US-A1- 2005 184 079
- US-A1- 2005 188 857

## Description

La présente invention concerne le domaine technique général des récipients de cuisine de toutes sortes destinés à être utilisés pour la préparation ou la cuisson d'aliments, lesdits récipients étant pourvus d'au moins un moyen de préhension pivotant susceptible d'occuper une position de préhension sensiblement radiale relativement à la paroi du récipient et une position de repos sensiblement non radiale et inversement.

La présente invention concerne un récipient de cuisine, par exemple un autocuiseur ou une friteuse ou encore plus généralement un récipient d'aide à diverses préparations culinaires, ledit récipient étant pourvu d'au moins un moyen de préhension pivotant susceptible de pivoter d'une position de préhension sensiblement radiale relativement à la paroi du récipient à une position de repos sensiblement non radiale et inversement.

Il est déjà connu de réaliser des récipients de cuisine, et notamment les fait-tout, les casseroles, voire certains autocuiseurs, avec des poignées aptes à pivoter le long de la paroi du récipient afin d'occuper soit une position de préhension dans laquelle la poignée s'étend sensiblement radialement par rapport à la paroi, soit une position de repos dans lequel la poignée occupe une position non radiale, c'est-à-dire en général une position sensiblement parallèle à la paroi du récipient.

Ces dispositifs sont communément connus sous le terme de *« poignées pivotantes* ». Ils permettent de réduire l'encombrement du récipient lorsqu'il n'est pas utilisé et donc de faciliter son rangement tout en procurant un gain de place appréciable dans les zones de rangements dévolues à ce type d'appareil.

On connaît par exemple le brevet US-3 683 452 qui décrit une poignée pivotante montée sur un récipient de cuisine. Ce dispositif est formé par une poignée montée à pivotement par un axe sur une embase solidaire de la paroi du récipient, ladite poignée étant pourvue d'une pièce de blocage qui vient en butée sous le rebord du récipient en position de préhension et assure un blocage relatif de la poignée par coopération avec le rebord du récipient. Un tel dispositif présente déjà un intérêt appréciable pour l'utilisateur et s'avère particulièrement simple. Néanmoins, un tel dispositif s'avère instable et par là même dangereux dans la mesure où il n'existe aucun verrouillage en position de préhension. Ainsi, lorsque la ou les poignées sont en position de préhension, c'est-à-dire lorsqu'elles s'étendent sensiblement radialement par rapport aux parois du récipient, la ou les poignées peuvent, en cas de manipulation maladroite de l'utilisateur ou tout simplement lors d'une tentative de versement du contenu du récipient, se replier partiellement ou totalement vers la (leur) position de repos, ce qui constitue bien évidemment un danger pour l'utilisateur et son environnement.

On connaît également des dispositifs plus récents qui mettent en oeuvre des systèmes complexes de commande permettant un verrouillage de la poignée en position de préhension. De tels dispositifs comprennent en général un élément de commande monté au sein de la poignée pivotante et sur lequel agit l'utilisateur, cet élément de commande permettant de bloquer ou de débloquer la poignée pour lui permettre de pivoter de sa position de préhension vers sa position de repos et inversement.

Si ces dispositifs apportent indéniablement un confort et une sécurité supplémentaires à l'utilisateur, il n'en demeure pas moins qu'ils comportent un certain nombre d'inconvénients liés en particulier et en premier lieu à leur complexité puisqu'ils mettent en oeuvre un grand nombre de pièces mobiles les unes par rapport aux autres. Ceci rend complexe les opérations de fabrication puis de montage tout en conduisant à augmenter le coût général de tels dispositifs. Par ailleurs, ces dispositifs s'avèrent d'une part fragiles, en raison précisément du grand nombre de pièces en mouvement nécessaires, et d'autre part souvent même d'une sécurité imparfaite puisque le grippage du dispositif ou la rupture d'une pièce peut intervenir inopinément et brusquement en cours de manipulation.

Par ailleurs, on connaît également, par la demande de brevet US-2005/0188857, des récipients de cuisine conformes au préambule de la revendication 1.

Les objets assignés à l'invention visent donc à porter remède aux inconvénients des dispositifs connus jusqu'à présent et à proposer un récipient de cuisine pourvu d'un nouveau moyen de préhension pivotant qui tout en étant particulièrement stable dans sa position de préhension est néanmoins très simple à réaliser, à monter sur le récipient et à commander tout en étant d'un prix de revient aussi faible que possible.

Un autre objet de l'invention vise à proposer un nouveau récipient de cuisine pourvu d'un nouveau moyen de préhension pivotant dont le guidage est parfaitement sûr et qui évite toute manipulation malencontreuse.

Un autre objet de l'invention vise à proposer un nouveau récipient de cuisine pourvu d'un nouveau moyen de préhension pivotant qui permette un déplacement et un pivotement particulièrement faciles et souples des pièces entre elles.

Un autre objet de l'invention vise à proposer un nouveau récipient de cuisine pourvu d'un nouveau moyen de préhension pivotant permettant un verrouillage automatique particulièrement sûr des poignées.

Un autre objet de l'invention vise à proposer un nouveau récipient de cuisine pourvu d'un nouveau moyen de préhension pivotant dont la commande s'avère particulièrement facile pour l'utilisateur.

Les objets assignés à l'invention sont atteints à l'aide d'un récipient de cuisine pourvu d'au moins un moyen de préhension pivotant susceptible de pivoter d'une position de préhension sensiblement radiale relativement à la paroi du récipient à une position de repos sensiblement non radiale et inversement, caractérisé en ce que ledit au moins un moyen de préhension pivotant comporte :
- une embase fixée sur la paroi du récipient,
- une poignée de préhension montée sur l'embase de manière à pivoter entre les positions de préhension et de repos,
- un moyen de verrouillage destiné à verrouiller la poignée dans sa position de préhension, ledit moyen étant monté sur l'embase de façon déplaçable et étant sous la commande d'un organe de commande actionnable par un utilisateur.

D'autres particularités et avantages de l'invention apparaîtront et ressortiront plus en détails à la lecture de la description faite ci-après, en référence aux dessins annexés, donnés à titre d'exemples illustratifs et non limitatifs dans lesquels :
- La figure 1 représente une vue en perspective d'un récipient de cuisine conforme à l'invention avec un moyen de préhension en position de repos.
- La figure 2 illustre, selon une vue partielle en perspective et en coupe latérale un moyen de préhension pivotant en position de préhension correspondant à une première variante de réalisation de l'invention.
- La figure 2A illustre un détail de réalisation tiré d'un agrandissement d'une partie de la figure 2
- La figure 3 représente, selon une vue en coupe transversale un moyen de préhension pivotant en position de préhension et correspondant à une première variante de réalisation de l'invention.
- La figure 4 représente, selon une vue en coupe transversale le moyen de préhension illustré à la figure 3 mais en position de repos.
- La figure 5 représente, selon une vue en coupe transversale un moyen de préhension pivotant en position de préhension correspondant à une seconde variante de réalisation de l'invention.
- La figure 6 représente, selon une vue en perspective partielle le moyen de préhension de la figure 5 correspondant à la seconde variante de réalisation, le moyen de préhension étant en position de repos.
- La figure 7 représente, selon une vue en perspective partielle un détail de réalisation d'un moyen de préhension pivotant conforme à l'invention et réalisé selon la première variante de réalisation.
- La figure 8 représente, selon une vue en perspective, une variante de l'invention selon laquelle le moyen de verrouillage et le moyen de commande font partie de la même pièce.

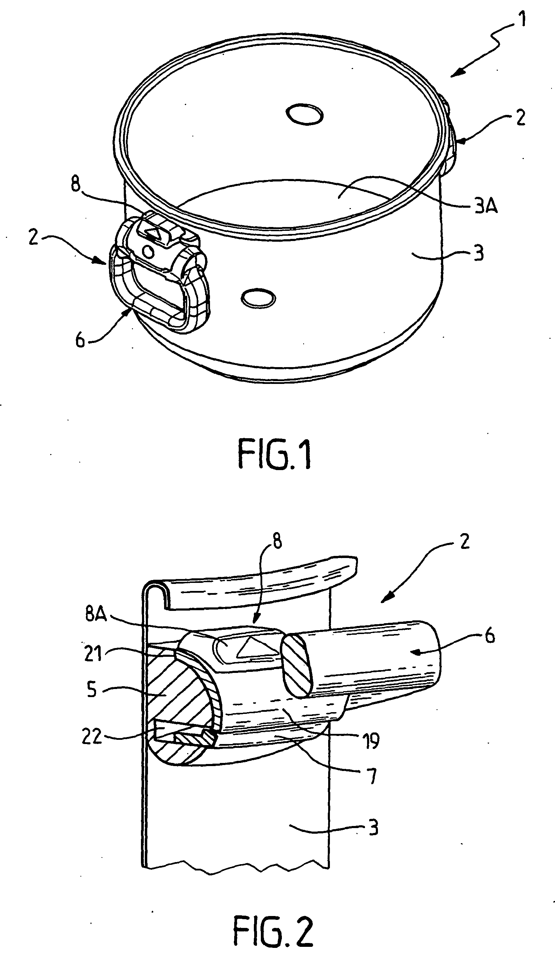

La figure 1 montre un récipient de cuisine 1 pourvu d'au moins un moyen de préhension pivotant 2 monté sur la paroi 3 du récipient et comportant une poignée 6. Dans l'exemple représenté à titre purement illustratif, le récipient de cuisine 1 est pourvu de deux moyens de préhension 2 montés de manière diamétralement opposés sur la paroi 3 dudit récipient. Une telle représentation est purement illustrative, l'invention concernant des récipients de cuisine pouvant être équipés d'un seul et unique moyen de préhension pivotant ou au contraire d'une pluralité de moyens de préhension pivotant non nécessairement limités à deux moyens de préhension pivotants.

Dans la description qui suit, fondée sur le récipient de cuisine tel que celui illustré aux figures 1 à 7 de la présente demande de brevet, il sera fait référence à un récipient de cuisine formé par une cuve d'autocuiseur réalisée en matériau métallique et destinée à recevoir un couvercle (non représenté aux figures) pourvu d'un dispositif de verrouillage de tout type connu, et par exemple à mâchoires ou à baïonnettes. La référence à un récipient de cuisine formée par un autocuiseur est purement illustrative, l'invention pouvant au contraire s'appliquer à et concerner tout type de récipient de cuisine indépendamment de leur destination, de leur matériau constitutif, s'agissant donc par exemple de manière nullement limitative, non seulement d'autocuiseurs, mais encore d'appareils de cuisson tels que friteuses, fait-touts, poêles, sauceuses ou encore récipients de préparation culinaire du genre mélangeur ou autre.

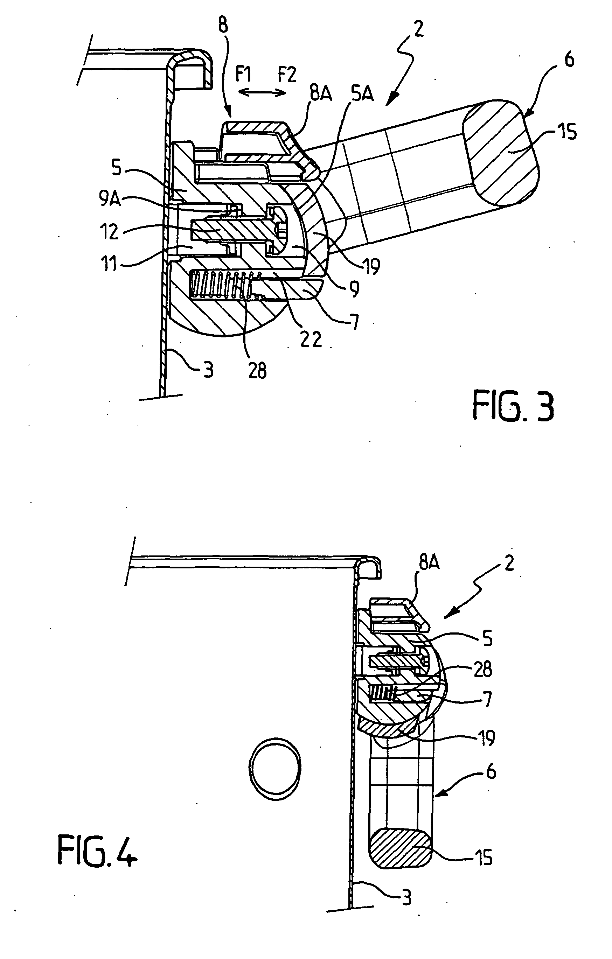

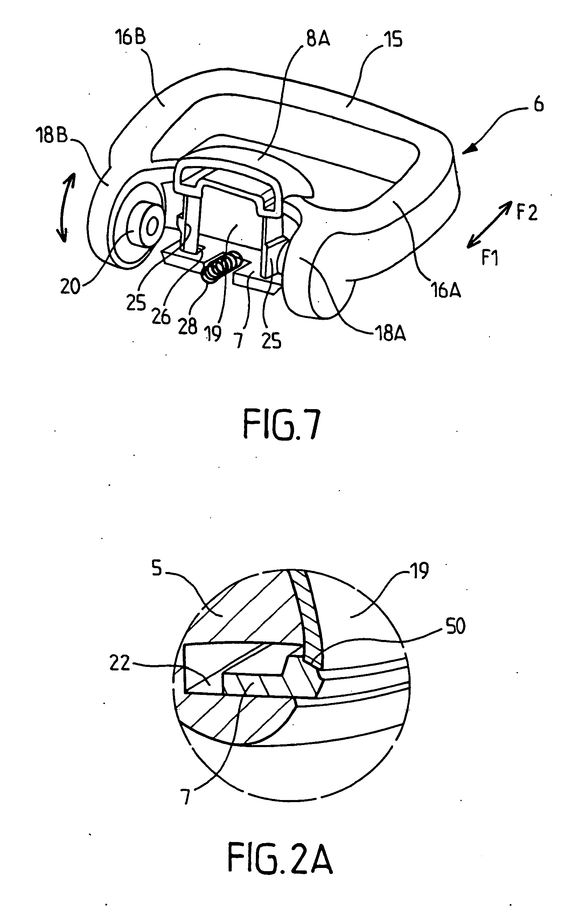

L'invention concerne donc un récipient de cuisine 1 au sens général pourvu d'au moins un moyen de préhension pivotant 2 susceptible de pivoter, en particulier sa poignée 6, d'une position de préhension (figures 2, 3 ou 5 par exemple) dans laquelle il s'étend selon une direction sensiblement radiale relativement à la paroi 3 du récipient, à ou vers une position de repos (figure 4) dans laquelle le moyen de préhension 2 s'étend selon une direction sensiblement non radiale ou encore s'étend selon une direction sensiblement parallèle à la paroi 3. Dans sa position de préhension le moyen de préhension 2 est verrouillé et peut pivoter dans sa position de repos et inversement.

Tel qu'illustré par exemple aux figures 2 à 4, le moyen de préhension pivotant 2 selon l'invention comporte :
- une embase 5 fixée sur la paroi 3 du récipient,
- une poignée de préhension 6 montée sur l'embase 5 de manière à pivoter entre les positions de préhension et de repos tel que définies précédemment,
- un moyen de verrouillage 7 destiné à verrouiller la poignée 6 dans sa position de préhension, ledit moyen de verrouillage 7 étant monté déplaçable sur l'embase 5 et étant sous la commande d'un organe de - commande 8 actionnable par un utilisateur.

En d'autres termes, le moyen de verrouillage 7 est monté sur l'embase 5 de façon déplaçable par rapport à cette dernière, c'est-à-dire qu'il est intégré à l'embase et dispose d'une certaine mobilité par rapport à celle-ci.

En outre, l'organe de commande 8, comme le moyen de verrouillage 7, est préférentiellement monté sur l'embase ce qui facilite l'actionnement de l'organe de commande 8 par l'utilisateur tout en : réduisant les risques de mauvaise manipulation, augmentant la solidité de l'ensemble et facilitant le montage.

Selon l'invention, l'embase 5 peut se présenter comme une pièce sensiblement tronconique en matériau métallique ou plastique par exemple, pourvu d'un ou plusieurs logements 9, 9A débouchant librement vers l'extérieur ou l'intérieur de manière à recevoir un moyen de fixation sur la paroi 3 et à assurer sa fixation. Tel qu'illustré à la figure 3, l'embase 5 est avantageusement fixée sur la paroi par l'intermédiaire d'une bride 11 solidaire, par exemple par soudage, de la paroi 3, l'embase 5 étant rapportée par l'un de ses logements 9A sur la bride 11 et étant fixée à demeure à cette dernière par l'intermédiaire d'une fixation, telle qu'une vis 12. On obtient donc ainsi un montage particulièrement simple, facile et solide de l'ensemble du moyen de préhension pivotant 2.

Selon cette première variante de réalisation, les moyens de fixation utilisés conduisent à un moyen de préhension pivotant qui est fixé à demeure sur la paroi 3. Néanmoins il est envisageable de réaliser des moyens de préhension pivotants 2 qui ne seraient pas fixés à demeure sur la paroi 3, mais au contraire qui seraient fixés avec une possibilité d'amovibilité rapide de telle sorte qu'au sens de l'invention, le moyen de préhension pivotant doit être considéré comme couvrant à la fois des moyens de préhension pivotants 2 fixés à demeure c'est-à-dire non facilement démontables par l'utilisateur, et des moyens de préhension pivotants amovibles qui peuvent être retirés très facilement et rapidement par l'utilisateur.

La poignée de préhension 6 se présente sous la forme d'une poignée en « U » (figure 7 par exemple) avec une zone centrale 15 de préhension et deux branches latérales 16A, 16B se joignant vers leur extrémité respective 18A, 18B par une bride de liaison 19. La poignée 6 est montée à pivotement sur l'embase 5 par l'intermédiaire d'axes 20 portés par les extrémités 18A, 18B.

Tel que visible aux figures 2, 3 et 7, et selon une disposition qui peut constituer une invention à part entière, c'est-à-dire indépendamment de la présence ou non du moyen de verrouillage 7, le moyen de préhension 2 comporte des moyens de guidage en pivotement de la poignée 6 sur l'embase 5.

Avantageusement, les moyens de guidage comprennent une pièce de glissement courbe ménagée sur la poignée 6, laquelle pièce de glissement coopère avec un chemin de glissement 5A de courbure conjuguée, ledit chemin de glissement 5A étant ménagé sur l'embase 5.

Tels que représentés sur les figures 2, 3 et 7, les moyens de guidage sont avantageusement formés par la bride de liaison 19 dont la courbure est conjuguée au chemin de glissement 5A situé à la face externe de l'embase 5, la bride de liaison 19 venant donc se guider en pivotement sur ledit chemin de glissement 5A.

Grâce à ce montage on obtient un excellent guidage des pièces se qui confère une grande robustesse et une grande sécurité à l'ensemble.

En effet, l'adjonction de moyens de guidage en pivotement, distincts des portées des axes 20, permet d'offrir une surface de contact supplémentaire entre la poignée 6 et l'embase 5, ladite surface formant une portée additionnelle, ce qui contribue à limiter le jeu dans la liaison pivot et à améliorer l'assise de la poignée 6 sur l'embase 5.

Avantageusement, l'embase 5 est pourvue d'une butée 21 située dans la variante de réalisation des figures 2, 3 et 7, à la partie supérieure de l'embase 5, butée 21 contre laquelle la poignée 6 vient s'appliquer en position de préhension tout en étant verrouillée en position par le moyen de verrouillage 7, de manière à être verrouillée *in situ* dans les deux directions opposées de pivotement possibles de la poignée 6.

Tel que visible à la figure 2, la butée 21 se présente sous la forme d'une rainure longitudinale ménagée dans l'embase 5 elle-même et contre laquelle vient buter la section ou tranche terminale de la bride de liaison 19. Grâce à cette disposition, la position de préhension est donc particulièrement stable et sûre.

Selon cette première variante de réalisation, le moyen de verrouillage 7 est monté élastiquement mobile au sein de l'embase 5. Tel qu'illustré aux figures 2, 3, 4 et 7, le moyen de verrouillage 7 est formé par une plaque d'appui monté à coulissement libre dans une fente 22, sensiblement normale à la paroi 3 et ménagée dans l'embase 5, la poignée 6 venant en appui, avantageusement par la section ou tranche terminale inférieure de la bride de liaison 19, sur ou contre ladite plaque pour se verrouiller en position de préhension. Dans la position de préhension, la poignée 6 est donc verrouillée selon les deux directions de pivotement possibles autour de l'axe 20, selon une première direction par la butée 21, et selon l'autre direction opposée par le moyen de verrouillage 7, en l'occurrence la plaque d'appui.

Selon la première variante de réalisation illustrée aux figures 1 à 4 et 7, le moyen de commande 8 est formé par une pièce distincte du moyen de verrouillage 7. Il est avantageusement formé par un bouton 8A guidé à déplacement sur l'embase 5, monté de préférence à ou sur la partie supérieure de l'embase 5 et pourvu d'au moins une jambe de commande 25 (figure 7) reliée au moyen de verrouillage 7.

Avantageusement, tel qu'illustré à la figure 7, le bouton 8A est monté à translation sur l'embase 5 selon les direction F1 et F2 et comporte deux jambes 25 sensiblement parallèles traversant l'embase 5 et venant engager la plaque d'appui 7 pour assurer sa translation par l'intermédiaire de deux orifices respectifs 26 dans lesquels viennent s'engager lesdites jambes 25.

Avantageusement, la plaque d'appui 7 est montée élastiquement mobile au sein de la fente 22 par l'intermédiaire d'un ressort de compression 28 qui contraint en permanence ladite plaque d'appui 7 selon la direction F2 tel qu'illustré à la figure 3.

Ainsi, en position de repos (ou abaissée), (figure 4) de la poignée, la plaque d'appui 7 est au fond de la fente 22 et la bride liaison 19 recouvre l'ouverture de la fente 22 alors que le bouton 8 est dans sa position rapprochée de la paroi 3. Au contraire, pour atteindre sa position de préhension (figure 3), la plaque d'appui 7 se translate selon la flèche F2 vers sa position de verrouillage où elle supporte et verrouille la bride de liaison 19. Le bouton 8 est lui aussi déplacé en translation dans la même direction F2 puisque son déplacement est associé à celui de la plaque d'appui 7 pour venir occuper sa seconde position la plus éloignée de la paroi 3.

Selon cette première variante de réalisation, l'utilisateur, partant de la position de préhension illustrée à la figure 3, pousse ou appuie sur le bouton 8 selon la direction F1 ce qui a pour conséquence de déplacer le bouton 8-en direction de la paroi 3. En se déplaçant selon la flèche F1 le bouton 8 entraîne par ses jambes 25 le moyen de verrouillage 7, c'est-à-dire la plaque d'appui également selon la direction F1 au sein du logement 22 à l'encontre de la force de réaction exercée par le ressort 28 jusqu'à ce que le moyen de verrouillage libère la partie inférieure de la bride de liaison 19 permettant alors la libre rotation de la poignée 6 jusque vers sa position finale de repos illustrée à la figure 4.

Selon cette variante de réalisation, le moyen de préhension 6 est conçu pour qu'en position de repos, la poignée de préhension 6 est dirigée vers le bas du récipient c'est-à-dire vers le fond 3A du récipient. Dans la version illustrée aux figures 1 à 4, la butée 21 est située au-dessus du moyen de verrouillage 7.

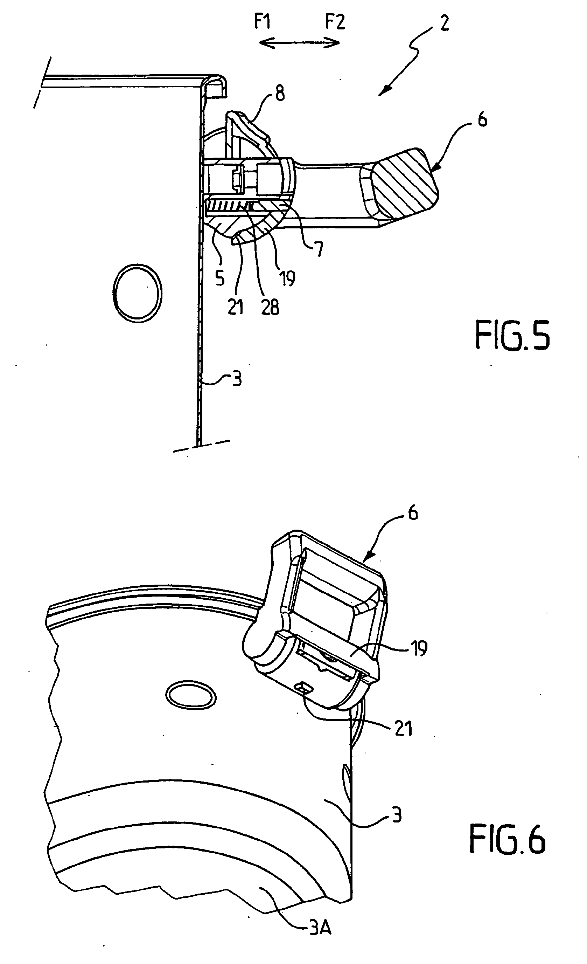

Selon une variante de réalisation illustrée aux figures 5 et 6, le moyen de préhension 6 est conçu pour qu'en position de repos (figure 6), la poignée de préhension 6 soit dirigée vers le haut, c'est-à-dire vers l'ouverture du récipient à partir de sa position de préhension sensiblement radiale.

Cette seconde variante de réalisation ne diffère de celle illustrée aux figures 1 à 4 que par la position de la butée 21 qui, au lieu d'être située au-dessus du moyen de verrouillage 7 est située au-dessous du moyen de verrouillage 7 sur l'embase 5 tel qu'illustré à la figure 5. La butée 21 est donc ménagée à la partie inférieure de l'embase 5 de telle sorte que la partie inférieure de la bride de liaison 19 vienne en butée contre ladite butée 21 lorsque la poignée 6 est dans une position sensiblement radiale, c'est-à-dire sensiblement perpendiculaire à la paroi 3. Dans cette position illustrée à la figure 5, la bride 19 est conformée et dimensionnée pour que le moyen de verrouillage 7, contraint par le ressort 28 selon la direction F2, vienne contre et en appui de la tranche supérieure de la bride de liaison 19 pour verrouiller complètement la poignée 6 dans sa position de préhension.

Comme dans la première variante de réalisation, une action de l'utilisateur sur le moyen de commande 8 par pression dans la direction F1 déplace le moyen de verrouillage 7 selon cette même direction F1 ce qui libère le moyen de verrouillage 7 qui peut alors s'escamoter au fond de la'fente 22 pour permettre à l'utilisateur de relever la poignée 6 vers la position haute illustrée à la figure 6 laquelle correspond à la position de repos.

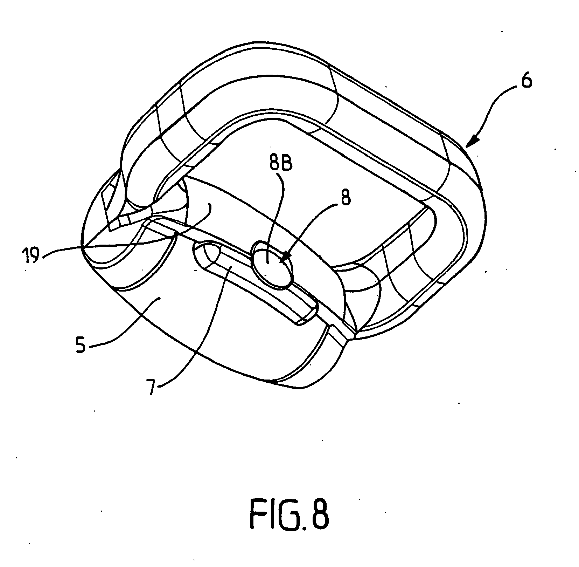

Selon une autre variante de réalisation particulièrement simple (figure 8), il est possible de réaliser l'une et l'autre des variantes illustrées aux figures 1 à 7 en faisant assumer la fonction de commande générale (moyen de commande 8) du déplacement du moyen de verrouillage 7, non pas par un bouton 8A indépendant et distinct dudit moyen de verrouillage 7, mais par le moyen de verrouillage 7 lui-même, notamment par une portion dudit moyen de verrouillage.

De cette façon, le moyen de verrouillage 7 assume une double fonction, à savoir celle du moyen de verrouillage et du moyen de commande. Selon cette dernière variante de réalisation le bouton 8A illustré aux figures 1 à 7 est supprimé et l'utilisateur assure directement la commande de la translation du moyen de verrouillage 7 en agissant et appuyant directement sur le moyen de verrouillage 7, par exemple sur une zone ou portion 8B appropriée et dédiée à cet effet située sur la tranche, telle qu'illustrée à titre purement schématique à la figure 8 sur laquelle le moyen de préhension pivotant 2 est en position de préhension.

A titre de variante particulièrement intéressante, il est possible de prévoir un système de rattrapage de jeu sur le moyen de préhension 2 tel que montré à la figure 2A. Ainsi, le moyen de préhension 2 comporte un système de rattrapage de jeu destiné à assurer un verrouillage sûr et précis en toutes circonstances. Avantageusement, il est formé par une pente inclinée 50 ménagée sur le moyen de verrouillage 7, de préférence au niveau de la partie terminale de la plaque d'appui 7 destinée à venir en contact avec et à supporter la poignée 6, en particulier la tranche inférieure de la bride de liaison 19. Cette pente inclinée 50 qui s'étend sur toute la largeur de la plaque d'appui et en direction de la poignée 6 permet d'accommoder d'éventuelles différences dimensionnelles entre les pièces et d'obtenir ainsi un verrouillage sûr.

Il est remarquable qu'un système de rattrapage de jeu conforme à l'invention, c'est-à-dire qui met en oeuvre un coin mobile apte à compenser d'éventuels jeux naissants entre les pièces constitutives du moyen de préhension 2, plus particulièrement lorsque ce dernier se trouve en position de préhension, est susceptible d'être adapté à tout type de moyen de préhension 2 équivalent à celui décrit précédemment. En particulier, il serait envisageable d'intégrer au moyen de verrouillage 7 un système de rattrapage de jeu alors même que ledit moyen de verrouillage 7 serait monté sur la poignée 6 au lieu d'être monté sur l'embase 5.

Le dispositif conforme à l'invention permet ainsi d'obtenir des poignées pivotantes qui sont stables aussi bien dans la position de préhension que dans la position de repos. Ceci confère également une grande solidité à l'ensemble et une grande sécurité, en particulier lors du transport du récipient.

Selon l'invention, et selon une variante de réalisation particulièrement avantageuse, le moyen de préhension 2 peut également être monobloc, c'est à dire ne former qu'une seule et unique pièce dont tous les éléments sont pré montés ensemble ce qui rend son opération de montage sur le récipient particulièrement simple. Dans ce cas, la poignée 6, l'embase 5 et ses constituants y compris le moyen de commande 8 sont directement montés, par exemple par vissage sur la bride 11.

Le mécanisme est par ailleurs particulièrement ergonomique et les gestes

Le mécanisme est par ailleurs particulièrement ergonomique et les gestes impliqués sont facilement compréhensibles et mémorisables par l'utilisateur grâce à la forme et à l'emplacement des pièces notamment de commande et de verrouillage.

Le mécanisme de verrouillage est particulièrement solide et il procure une impression de sécurité importante du mécanisme en raison de sa robustesse et du verrouillage complet assuré. On obtient ainsi une sécurité appréciable en particulier lors du basculement du récipient.

## Revendications

1. Récipient de cuisine (1) pourvu d'au moins un moyen de préhension pivotant (2) susceptible de pivoter d'une position de préhension sensiblement radiale relativement à la paroi (3) du récipient à une position de repos sensiblement non radiale et inversement, ledit au moins un moyen de préhension pivotant (2) comportant :
- une embase (5) fixée sur la paroi (3) du récipient,
- une poignée de préhension (6) montée sur l'embase (5) de manière à pivoter entre les positions de préhension et de repos,
- un moyen de verrouillage (7) destiné à verrouiller la poignée (6) dans sa position de préhension, ledit moyen de verrouillage (7) étant sous la commande d'un organe de commande (8) actionnable par un utilisateur,
**caractérisé en ce que** ledit moyen de verrouillage (7) est monté sur l'embase (5) de façon déplaçable.

2. Récipient selon la revendication 1 **caractérisé en ce que** l'embase (5) est pourvue d'une butée (21) contre laquelle la poignée (6) vient s'appliquer en position de préhension tout en étant verrouillée en position par le moyen de verrouillage (7), de manière à être verrouillée en place dans les deux directions opposées de pivotement.

3. Récipient selon la revendication 1 ou 2 **caractérisé en ce que** le moyen de préhension (2) comporte des moyens de guidage en pivotement de la poignée (6) sur l'embase (5).

4. Récipient selon la revendication 3 **caractérisé en ce que** les moyens de guidage comprennent une pièce de glissement courbe ménagée sur la poignée (6) laquelle pièce coopère avec un chemin de glissement (5A) de courbure conjugué, ménagé sur l'embase (5).

5. Récipient selon l'une des revendications 1 à 4 **caractérisé en ce que** le moyen de verrouillage (7) est monté élastiquement mobile au sein de l'embase (5).

6. Récipient selon l'une des revendications 1 à 5 **caractérisé en ce que** le moyen de verrouillage (7) est formé par une plaque d'appui montée à coulissement libre dans une fente (22) ménagée dans l'embase (5), la poignée (6) venant en appui sur ladite plaque pour se verrouiller en position.

7. Récipient selon l'une des revendications 1 à 6 **caractérisé en ce que** le moyen de commande (8) est monté sur l'embase (5), est formé par un bouton (8A) guidé à déplacement sur l'embase (5) et pourvu au moins d'une jambe de commande (25) reliée au moyen de verrouillage (7).

8. Récipient selon les revendications 6 et 7 **caractérisé en ce que** le bouton (8A) est monté à translation sur l'embase (5) et comporte deux jambes (25) traversant l'embase (5) et venant engager la plaque d'appui pour assurer sa translation.

9. Récipient selon les revendications 1 et 6 **caractérisé en ce que** le moyen de commande (8) est formé par une portion (8B) du moyen de verrouillage (7) accessible à l'utilisateur.

10. Récipient selon l'une des revendications 1 à 9 **caractérisé en ce que** le moyen de préhension (2) est conçu pour qu'en position de repos, la poignée de préhension (6) soit dirigée vers le bas du récipient (1), c'est-à-dire vers le fond du récipient.

11. Récipient selon les revendications 2 et 10 **caractérisé en ce que** la butée (21) est située au-dessus du moyen de verrouillage (7).

12. Récipient selon l'une des revendications 1 à 9 **caractérisé en ce que** le moyen de préhension (2) est conçu pour qu'en position de repos, la poignée de préhension (6) soit dirigée vers le haut, c'est-à-dire vers l'ouverture du récipient.

13. Récipient selon les revendications 2 et 12 **caractérisé en ce que** la butée (21) est située au-dessous du moyen de verrouillage (7).

14. Récipient selon l'une des revendications 1 à 13 **caractérisé en ce que** le moyen de préhension (2) est monobloc.

15. Récipient selon l'une des revendications 1 à 14 **caractérisé en ce qu'**il comporte un système de rattrapage de jeu.

16. Récipient selon la revendication 15 **caractérisé en ce que** le système de rattrapage de jeu est formé par une pente inclinée (50) ménagée sur le moyen de verrouillage (7).

17. Récipient selon l'une des revendications 1 à 16 **caractérisé en ce qu'**il est formé par un autocuiseur ou par une friteuse.

## Claims

1. Kitchen receptacle (1) provided with at least one pivoting gripping means (2) able to pivot from a gripping position that is substantially radial relative to the wall (3) of the receptacle to an idle position that is substantially non-radial and vice versa, the said at least one pivoting gripping means (2) comprising:
- a base (5) fixed to the wall (3) of the receptacle,
- a gripping handle (6) mounted on the base (5) so as to pivot between the gripping and idle positions,
- a locking means (7) intended to lock the handle (6) in its gripping position, the said locking means (7) being under the control of a control member (8) actuatable by a user,
**characterised in that** the said locking means (7) is mounted on the base (5) in a movable fashion.

2. Receptacle according to claim 1, **characterised in that** the base (5) is provided with a stop (21) against which the handle (6) comes to be applied in the gripping position while being locked in position by the locking means (7), so as to be locked in place in both opposite pivoting directions.

3. Receptacle according to claim 1 or 2, **characterised in that** the gripping means (2) comprises means for guiding the handle (6) pivotally on the base (5).

4. Receptacle according to claim 3, **characterised in that** the guiding means comprise a curved sliding piece provided on the handle (6), the said piece cooperating with a sliding track (5A) of conjugate curvature, provided on the base (5).

5. Receptacle according to one of claims 1 to 4, **characterised in that** the locking means (7) is mounted so as to be elastically movable within the base (5).

6. Receptacle according to one of claims 1 to 5, **characterised in that** the locking means (7) is formed by a support plate mounted for free sliding in a slot (22) provided in the base (5), the handle (6) coming into abutment on the said plate in order to be locked in position.

7. Receptacle according to one of claims 1 to 6, **characterised in that** the control means (8) is mounted on the base (5), is formed by a knob (8A) guided for movement on the base (5) and provided with at least one control leg (25) connected to the locking means (7).

8. Receptacle according to claims 6 and 7, **characterised in that** the knob (8A) is mounted for translation on the base (5) and comprises two legs (25) passing through the base (5) and engaging the support plate in order to ensure its translation.

9. Receptacle according to claims 1 and 6, **characterised in that** the control means (8) is formed by a portion (8B) of the locking means (7) which is accessible to the user.

10. Receptacle according to one of claims 1 to 9, **characterised in that** the gripping means (2) is designed so that, in the idle position, the gripping handle (6) is directed towards the lower part of the receptacle (1), that is to say towards the bottom of the receptacle.

11. Receptacle according claims 2 and 10, **characterised in that** the stop (21) is situated above the locking means (7).

12. Receptacle according to one of claims 1 to 9, **characterised in that** the gripping means (2) is designed so that, in the idle position, the gripping handle (6) is directed towards the top, that is to say towards the opening of the receptacle.

13. Receptacle according to claims 2 and 12, **characterised in that** the stop (21) is situated below the locking means (7).

14. Receptacle according to one of claims 1 to 13, **characterised in that** the gripping means (2) is in a single piece.

15. Receptacle according to one of claims 1 to 14, **characterised in that** it comprises a clearance-takeup system.

16. Receptacle according to claim 15, **characterised in that** the clearance-takeup system is formed by an inclined slope (50) provided on the locking means (7).

17. Receptacle according to one of claims 1 to 16, **characterised in that** it is formed by a pressure cooker or deep fryer.

## Patentansprüche

1. Kochgefäß (1) mit zumindest einem schwenkbaren Greifmittel (2), dazu geeignet, von einer Greifposition, die bezüglich der Wand (3) des Gefäßes im Wesentlichen radial ist, in eine Ruheposition zu schwenken, die im Wesentlichen nicht radial ist, und umgekehrt, wobei das zumindest eine schwenkbare Greifmittel (2) Folgendes umfasst:
- einen Sockel (5), der auf der Wand (3) des Gefäßes befestigt ist,
- einen Handgriff (6), der auf dem Sockel(5) angebracht ist, um zwischen der Greifposition und der Ruheposition zu schwenken,
- ein Verriegelungsmittel (7), das dazu vorgesehen ist, den Griff (6) in seiner Greifposition zu verriegeln, wobei das verriegelungsmittel (7) von einem Steuerorgan (8), das von einem Benutzer bedient werden kann, gesteuert wird,
**dadurch gekennzeichnet, dass** das Verriegelungsmittel (7) beweglich auf dem Sockel (5) befestigt ist,

2. Gefäß nach Anspruch 1, **dadurch gekennzeichnet, dass** der Sockel (5) mit einem Anschlag (21) versehen ist, gegen den sich der Griff (6) in der Greifposition anlegt und gleichzeitig in Position durch das Verriegelungsmittel (7) verriegelt wird, so dass er an der Stelle in den zwei entgegengesetzten Richtungen des Schwenkens verriegelt ist.

3. Gefäß nach Anspruch 1 oder 2, **dadurch gekennzeichnet, dass** das Greifmittel (2) Mittel zur Führung beim Schwenken des Griffs (6) auf dem Sockel (5) umfasst.

4. Gefäß nach Anspruch 3, **dadurch gekennzeichnet, dass** die Mittel zur Führung ein gekrümmtes Gleitstück umfassen, das auf dem Griff (6) angebracht ist, wobei dieses Stück mit einem Gleitweg (5A) mit einer korrespondierenden Krümmung zusammenwirkt, der auf dem Sockel (5) angebracht ist.

5. Gefäß nach einem der Ansprüche 1 bis 4, **dadurch gekennzeichnet, dass** das Verriegelungsmittel (7) elastisch beweglich innerhalb des Sockels (5) angebracht ist.

6. Gefäß nach einem der Ansprüche 1 bis 5, **dadurch gekennzeichnet, dass** das Verriegelungsmittel (7) durch eine Auflageplatte gebildet ist, die frei gleitend in einem Spalt (22) angebracht ist, der in dem Sockel (5) angebracht isL, wobei der Griff (6) sich auf die Platte auflegt, um sich in seiner Position zu verriegeln.

7. Gefäß nach einem der Ansprüche 1 bis 6, **dadurch gekennzeichnet, dass** das Steuermittel (8) auf dem Sockel (5) angebracht ist, dass es durch einen Druckknopf (8A) gebildet ist, der auf dem Sockel (5) bei der Verschiebung geführt wird und dass es mit mindestens einer Steuerstange (25) versehen ist, die mit dem Verriegelungsmittel (7) verbunden ist.

8. Gefäß nach Anspruch 6 und 7, **dadurch gekennzeichnet, dass** der Druckknopf (8A) zur Translation auf dem Sockel (5) angebracht ist und zwei Stangen (25) umfasst, die den Sockel (5) durchdringen und die Anlageplatte mitnehmen, um die Translation sicherzustellen.

9. Gefäß nach Anspruch 1 und 6, **dadurch gekennzeichnet, dass** das Steuermittel (8) durch einen Teil (8B) des Verriegelungsmittels (7) gebildet ist, der für den Anwender zugänglich ist.

10. Gefäß nach einem der Anspruche 1 bis 9, **dadurch gekennzeichnet**, das das Greifmittel (2) so konzipiert ist, dass in der Ruhestellung der Handgriff (6) zum unteren Teil des Gefäßes (1), d.h. zum Boden des Gefäßes hin, gerichtet ist.

11. Gefäß nach Anspruch 2 und 10, **dadurch gekennzeichnet, dass** sich der Anschlag (21) über dem Verriegelungsmittel (7) befindet.

12. Gefäß nach einem der Ansprüche 1 bis 9, **dadurch gekennzeichnet**, das das Greifmittel (2) so konzipiert ist, dass in der Ruhestellung der Handgriff (6) nach oben, d.h. zur Öffnung des Gefäßes hin, gerichtet ist.

13. Gefäß nach Anspruch 2 und 12, **dadurch gekennzeichnet, dass** sich der Anschlag (21) unter dem Verriegelungsmittel (7) befindet.

14. Gefäß nach einem der Ansprüche 1 bis 13, **dadurch gekennzeichnet, dass** das Greifmittel (2) einstückig ist.

15. Gefäß nach einem der Ansprüche 1 bis 14, **dadurch gekennzeichnet, dass** es ein System zur Einstellung des Spiels umfasst.

16. Gefäß nach Anspruch 15, **dadurch gekennzeichnet, dass** das System zur Einstellung des Spiels durch eine geneigte Fläche (50) gebildet ist, die auf dem Verriegelungsmittel (7) angebracht ist.

17. Gefäß (1) nach einem der Ansprüche 1 bis 16, **dadurch gekennzeichnet, dass** es durch einen Schnellkochtopf oder durch eine Fritteuse gebildet ist.
